# EUROPÄISCHE PATENTSCHRIFT

(11) **EP 3 516 958 B1**
(45) Veröffentlichungstag und Bekanntmachung des Hinweises auf die Patenterteilung: **14.05.2025**
(21) Anmeldenummer: 19150155.0
(22) Anmeldetag: 03.01.2019
(51) Int. Cl.: A01M 7/00

(54) **REGELVORRICHTUNG FÜR EIN LANDWIRTSCHAFTLICHES NUTZFAHRZEUG UND VERFAHREN ZUM BETREIBEN DES NUTZFAHRZEUGS**
CONTROL DEVICE FOR AN AGRICULTURAL COMMERCIAL VEHICLE AND METHOD FOR OPERATING THE COMMERCIAL VEHICLE
APPAREIL DE RÉGLAGE POUR UN VÉHICULE UTILITAIRE AGRICOLE ET PROCÉDÉ DE FONCTIONNEMENT DU VÉHICULE UTILITAIRE

(30) Priorität: 24.01.2018 DE 102018201121
(43) Veröffentlichungstag der Anmeldung: 31.07.2019
(73) Patentinhaber: Amazonen-Werke H. Dreyer SE & Co. KG, 49205 Hasbergen (DE)
(72) Erfinder: große Prues, Frank, 49593 Bersenbrück (DE)

(56) Entgegenhaltungen:
- EP-A1- 3 357 333
- EP-A1- 3 440 932
- EP-A1- 3 449 723
- DE-A1- 102016 110 693

## Beschreibung

Die Erfindung betrifft eine Regelvorrichtung für ein landwirtschaftliches Nutzfahrzeug zur Regelung der Neigung eines Verteilergestänges. Ferner betrifft die Erfindung ein landwirtschaftliches Nutzfahrzeug sowie ein Verfahren zum Betreiben eines landwirtschaftlichen Nutzfahrzeuges.

Derartige landwirtschaftliche Nutzfahrzeuge, welche auch Feldspritzen genannt werden, werden zum Ausbringen von Material, wie Düngemittel, Pflanzenschutzmittel und/oder Saatgut verwendet. Um das Material großflächig auf dem zu bearbeitenden Feldboden auszubringen, weisen die landwirtschaftlichen Nutzfahrzeuge ein Verteilergestänge auf, das eine Arbeitsbreite von bis zu 40 m umfassen kann. Am Verteilergestänge sind Sprühdüsen befestigt, welche das Material auf den zu bearbeitenden Boden sprühen. Für eine effiziente Ausbringung des Materials soll der Abstand zwischen dem Verteilergestänge und dem Boden über die gesamte Arbeitsbreite möglichst konstant bleiben.

Problematisch ist es, wenn das landwirtschaftliche Nutzfahrzeug in unterschiedlich tiefen Spurrillen des Bodens, einseitig in einer Furche oder an einem Hang des zu bearbeitenden Feldes fährt. Bei derartigen Bodenunebenheiten können die Enden des Verteilergestänges in Kontakt mit dem Boden und/oder Pflanzenbestand kommen und beschädigt werden. Zusätzlich ist die homogene Verteilung des auszubringenden Materials, durch nachteilige Drifteffekte aufgrund der geneigten Stellung des Verteilergestänges, nicht mehr gegeben.

Um unerwünschte Bewegungen um die Fahrzeuglängsachse auszugleichen, sind Vorrichtungen bekannt, die über eine Pendelaufhängung und über Neigungssensoren oder Abstandssensoren verfügen und welche über Stellorgane diese Neigung auszugleichen versuchen. Generell wird hierbei eine horizontale Lage des Verteilergestänges in Relation zu dem zu bearbeitenden Boden angestrebt.

Aus der DE 20 2007 011 631 U1 ist beispielsweise eine Aufhängvorrichtung für ein Verteilergestänge bekannt, wobei zwei Fluid-Niveauventile im Bereich der Aufhängung eines Hilfsrahmens am Fahrzeug angeordnet sind. Je nach Neigungsstellung des Verteilergestänges in Bezug auf das Fahrzeug, werden die Ventile unterschiedlich geöffnet oder geschlossen. Im Speziellen geben die Ventile proportional zur Auslenkung des Verteilergestänges einen Druck auf ein Stellorgan ab, was ein Umströmen des Fluids in das gekoppelte Stellorgan bewirkt. Das Stellorgan, welches zweckmäßigerweise als ein pneumatisches und/oder hydraulisches Stellorgan ausgebildet ist, wird dadurch aktiviert.

Die Aktivierung des Stellorgans bewirkt ein Schwenken des Verteilergestänges. Das Stellorgan kann somit die Neigung des Verteilergestänges ändern. Ist die Neigung wieder ausgeglichen, schließt das Ventil wieder.

Es gibt allerdings Situationen, wie beispielsweise den Straßentransport oder beim Ein- und Ausklappen des Verteilergestänges, in denen das Verteilergestänge über das Stellorgan starr mit dem landwirtschaftlichen Fahrzeug verbunden sein soll. Dazu sind Sperrventile in den Zuführleitungen zu dem Stellorgan angeordnet. Sobald diese geschlossen sind, kann kein Fluid aus dem Stellorgan entweichen und das Verteilergestänge ist starr mit dem landwirtschaftlichen Nutzfahrzeug verbunden.

Das anschließende Öffnen der Sperrventile, insbesondere bei asymmetrisch geklappten Verteilergestängen, kann zu unkontrollierten und damit schädlichen Bewegungen des Verteilergestänges führen. Die Sperrventile sind hierbei idealerweise sitzdicht ausgeführt. Das bedeutet, dass bei geschlossenem Zustand kein Öl passieren kann.

Zwar ist aus der DE 10 2016 110 693 A1 eine Regelvorrichtung für ein landwirtschaftliches Nutzfahrzeug mit einem beidseitig klappbaren Verteilergestänge zum Ausbringen von Material, wie Düngemittel, Pflanzenschutzmittel oder Saatgut, umfassend eine Regeleinheit und zugeordnete Druckregelventile zur Neigungsregelung des Verteilergestänges bekannt. Hierbei ist zum Verriegeln des Verteilergestänges jedem Druckregelventil ein Sperrventil zugeordnet, also ein Ventil mit lediglich zwei steuerbaren Öffnungszuständen, nämlich "sitzdicht gesperrt" und "geöffnet". Zur Vermeidung schädlicher Bewegungen des Verteilergestänges müssen die Druckregelventile jedoch bei jedem Öffnen der Sperrventile an zwischen diesen und dem Stellorgan zeitgleich gemessene Druckwerte angepasst werden. Dies hat sich als regelungstechnisch sehr aufwändig erwiesen.

In der vorveröffentlichten EP 3 449 729 A1 ist zudem eine Regelvorrichtung für ein landwirtschaftliches Nutzfahrzeug mit einem beidseitig klappbaren Verteilergestänge zum Ausbringen von Material, wie Düngemittel, Pflanzenschutzmittel oder Saatgut, beschrieben umfassend eine Regeleinheit und mit dieser verbundene Druckregelventile zur Neigungsregelung des Verteilergestänges, wobei jedem Druckregelventil ein vollständig schließbares Proportionalventil zum Verriegeln des Verteilergestänges sowie der Regeleinheit ein Datenspeicher zugeordnet ist, in dem unterschiedlichen Klappzuständen des Verteilergestänges zugeordnete anfängliche Solldruckwerte der Druckregelventile und/oder den anfänglichen Solldruckwerten zugeordnete elektrische Steuersignale abgelegt sind, wobei die Druckregelventile und die Proportionalventile hydraulische und/oder pneumatische Ventile sind, wobei die Regelvorrichtung ein an diese angeschlossenes Stellorgan für das Verteilergestänge umfasst, wobei das Stellorgan wenigstens einen pneumatisch und/oder hydraulisch arbeitenden Zylinder umfasst, und wobei die Regeleinheit so konfiguriert ist, dass die Druckregelventile beim Öffnen der Sperrventile an den zugehörigen anfänglichen Solldruck angepasst sind.

Der Erfindung liegt demgegenüber die Aufgabe zugrunde, eine Regelvorrichtung für ein landwirtschaftliches Nutzfahrzeug anzugeben, welches die Gefahr von unkontrollierten Bewegungen des Verteilergestänges, insbesondere beim Öffnen von Sperrventilen, verringert. Der Erfindung liegt ferner die Aufgabe zu Grunde, eine landwirtschaftliches Nutzfahrzeug, sowie ein Verfahren zum Betreiben eines landwirtschaftlichen Nutzfahrzeuges anzugeben.

Diese Aufgabe wird erfindungsgemäß durch eine Regelvorrichtung mit den Merkmalen des Anspruchs 1 gelöst. Im Hinblick auf das landwirtschaftliche Nutzfahrzeug wird die Aufgabe durch den Gegenstand des Anspruchs 10 gelöst. Ferner wird die Aufgabe im Hinblick auf das Verfahren durch den Gegenstand des Anspruchs 11 gelöst. Bevorzugte Ausführungsformen der Erfindung sind in den Unteransprüchen angegeben.

Demnach ist die Regelvorrichtung für ein landwirtschaftliches Nutzfahrzeug mit einem beidseitig klappbaren Verteilergestänge zum Ausbringen Düngemittel, Pflanzenschutzmittel, Saatgut oder dergleichen ausgebildet und umfasst u.a. eine Regeleinheit und mit dieser verbundene Druckregelventile zur Neigungsregelung des Verteilergestänges. Erfindungsgemäß ist jedem Druckregelventil ein Sperrventil zum Verriegeln des Verteilergestänges sowie der Regeleinheit ein Datenspeicher zugeordnet, in dem unterschiedlichen Klappzuständen des Verteilergestänges zugeordnete Start-Solldruckwerte der Druckregelventile und/oder den Start-Solldruckwerten entsprechende elektrische Steuersignale abgelegt sind. Die Start-Solldruckwerte können auch als anfängliche Solldruckwerte verstanden werden.

Die Erfindung hat zum einen den Vorteil, dass die Druckregelventile eine präzise Steuerung des Drucks ermöglichen, um einer unerwünschten Neigung des Verteilergestänges entgegen zu wirken. Zum anderen können die gespeicherten Start-Solldruckwerte als Ausgangspunkt für das Öffnen der Sperrventile verwendet werden. Beim Entriegeln kann die Neigungsregelung des Verteilergestänges somit passend zum aktuellen Klappzustand des Verteilergestänges fortgesetzt werden und wird dadurch vereinfacht und präzisiert. Die Neigungsregelung kann die Druckregelventile dann sozusagen immer von Beginn auf die zur aktuellen Gewichtsverteilung am Verteilergestänge passenden Solldruckwerte einstellen und davon ausgehend schnell und mit geringen Schwankungen die Neigung im Arbeitsbetrieb wunschgemäß nachregeln. Eine Messung von Druckwerten im Bereich der Druckregelventile ist dann im Arbeitsbetrieb insbesondere zur Verriegelung / Entriegelung des Verteilergestänges entbehrlich.

Mittels der Sperrventile kann das Verteilergestänge jederzeit in einer starren Position gehalten werden und somit verriegelt werden. Dies ist besonders vorteilhaft beim Fahren des landwirtschaftlichen Nutzfahrzeuges auf einer Straße oder beim Ein- und Ausklappen des Verteilergestänges. Sind die Sperrventile geschlossen, kann kein Fluid mehr aus dem Hydraulikzylinder entweichen, und das Verteilergestänge ist am landwirtschaftlichen Nutzfahrzeug verriegelt. Bei Öffnung der Sperrventile wird das Verteilergestänge entsprechend entriegelt und kann wieder mit den Druckregelventilen in seiner Neigung bezüglich des Fahrzeugrahmens verstellt werden.

Generell hat die Erfindung den Vorteil, dass die Neigungsregelung des Verteilergestänges für unterschiedliche Klappzustände schnell und präzise aufgenommen werden kann. Damit kann für unterschiedliche Rahmenbedingungen eine weitgehend homogene Ausgabe von Düngemittel, Pflanzenschutzmittel oder Saatgut gewährleistet werden und eine Beschädigung des Verteilergestänges sowohl im Arbeitsbetrieb als bei Straßenfahrten vermieden werden.

Da es beim Öffnen der Sperrventile prinzipiell zu unkontrollierten Bewegungen des Verteilergestänges kommen kann, erfolgt die Regelung der Neigungseinstellung vorteilhafterweise beim Öffnen der Sperrventile möglichst genau ausgehend vom zugeordneten Start-Solldruckwert. Dieser wird vorzugsweise bereits unmittelbar vor dem Öffnen eingestellt und während des Öffnens beibehalten. Auf diese Weise kann unkontrollierten Bewegungen des Verteilergestänges besonders schnell und effizient entgegengewirkt werden.

Ferner ist die Regeleinheit so konfiguriert, dass die Druckregelventile beim Öffnen der Sperrventile an den zugehörigen Start-Solldruck angepasst sind. Im Anschluss daran ist eine besonders präzise und stabile Neigungsregelung möglich.

Vorzugsweise sind die Druckregelventile zum Einhalten eines verbraucherseitigen Drucks in Abhängigkeit von einem elektrischen Steuersignal, insbesondere Steuerstrom, ausgebildet.

Das Druckregelventil ist dann beispielsweise ein direktgesteuertes und federbelastetes Dreiwegeventil beispielsweise in Schieberbauart. Im stromlosen Zustand bzw. ohne Steuersignal wird der Druck am Verbraucher zum Tank entlastet. Bei maximalem Steuersignal wird der maximal mögliche Druck (entweder der Druckversorgung oder der maximale Wert des Druckregelventils) auf den Verbraucher eingeregelt.

Bei Anlegen eines Steuersignals wird der Federbelastung im Ventil elektromagnetisch entgegengewirkt und der Druck auf der Verbraucherseite dadurch entsprechend der Steuerkennlinie des Ventils konstant gehalten. Beispielsweise ist der eingestellte Druck dann proportional zum Steuersignal, das insbesondere ein Steuerstrom ist. Eine solche proportionale Steuerkennlinie ist jedoch nicht zwingend erforderlich und kann beispielsweise aus Kostengründen durch eine nichtproportionale Ansteuerung ersetzt werden. Hierfür können beliebige Steuerkennlinien in der Steuereinheit abgelegt sein, um Steuersignale passend zu einzelnen Solldruckwerten zu berechnen und auszugeben.

Die Ventile können insbesondere einen Ventilkörper mit einem Regelkolben, einer Rückstellfeder und einer Magnetspule mit Magnetanker zur elektrischen Betätigung umfassen. Wenn ein elektrisches Signal über die Regeleinheit angelegt wird, kann der Magnetanker mit einer dem Signal entsprechenden Kraft auf den Regelkolben drücken. Dadurch kann Öl durch das Ventil strömen und Druck auf- oder abgebaut werden, wodurch das Stellorgan aktiviert werden kann. Dies geschieht solange, bis der anliegende Druck dem Solldruck gemäß elektrischem Signal entspricht.

Generell beruht die Funktionsweise von Proportionalventilen auf einer Regelung eines auftretenden Druckunterschieds. Wird ein voreingestelltes Druckniveau unterschritten, führt das Ventil selbsttätig Öl aus dem Hydraulikreservoir zu, bis der Sollwert wieder erreicht ist. Andernfalls wird bei einem zu hohen Druckniveau Öl abgelassen. Der Einsatz von Proportionalventilen bietet effiziente Steuer- und Stabilitätseigenschaften, sowie eine geringe Hysterese der Ventile, welche aufgrund von Reibung und Magnetisierung entstehen kann. Weiterhin ermöglichen Proportionalventile einen platzsparenden Einbau, sowie eine einfache Montage und Austauschbarkeit. Mit derartigen Ventilen kann der Hydraulikdruck in den Zylinderkammern des Stellorgans unabhängig voneinander eingestellt werden und so aktiv die Neigung des Verteilergestänges beeinflusst werden.

In einer bevorzugten Ausführungsform sind die Druckregelventile anhand einer bekannten Kennlinie elektronisch gesteuert auf einen Sollwert einstellbar. Die Kennlinien beschreiben beispielsweise den Zusammenhang zwischen einem auftretenden Druck und dem zugehörigen benötigten elektrischen Strom an einer Steuerspule des Ventils. Beispielhaft kann über die Drucksensoren ein einzustellender Sollwert der Druckregelventile ermittelt werden, wodurch anhand der Kennlinie ein Steuerstrom auf die Ventile geschaltet wird, um den entsprechenden Druck einzustellen. Dies hat den Vorteil, dass über die Kennlinie der Druckregelventile der Druck auf das Verteilergestänge präzise an einen Sollwert angepasst werden kann.

Ferner umfasst das Verteilergestänge klappbare Segmente sowie an dazwischenliegenden Gelenken jeweils Sensoren, insbesondere Potentiometer, zur Ermittlung der Klappzustände. Das Verteilergestänge umfasst beidseitig mehrteilige Ausleger, die segmentweise eingeklappt und ausgeklappt werden können und dabei auch Zwischenstellungen einnehmen können. Die Sensoren können dann vorzugsweise sowohl vollständig eingeklappte / ausgeklappte Segmente als auch Zwischenstellungen an den Gelenken zwischen benachbarten Segmenten feststellen sowie den jeweiligen Klappzustand an die Regeleinheit übermitteln. Diese kann daraus charakteristische Klappzustände des Verteilergestänges insgesamt ermitteln und den Druckregelventilen passend zum aktuellen Klappzustand jeweils einen Start-Solldruckwert und/oder ein entsprechendes Steuersignal zuordnen.

Vorzugsweise ist die Regeleinheit zum Berechnen von Start-Solldruckwerten auf der Grundlage verbraucherseitig in unterschiedlichen Klappzuständen des Verteilergestänges gemessener Druckwerte konfiguriert. Diese Druckwerte können zuvor an der jeweiligen Maschine gemessen worden sein oder gerätetypisch aus einer Datenbank eingelesen und/oder an der Steuereinheit manuell eingegeben werden.

Vorzugsweise ist die Regeleinheit zum Addieren und/oder Multiplizieren ausgelesener Start-Solldruckwerte mit wenigstens einer insbesondere an der Regeleinheit einstellbaren Konstante konfiguriert. Dadurch können systematische Ungenauigkeiten, Toleranzen oder dergleichen maschinenspezifisch berücksichtigt werden, um die Entriegelung / Neigungsregelung zu optimieren. Die systematischen Ungenauigkeiten ändern sich während eines Maschinenlebens normalerweise nicht oder nur unwesentlich und können so einfach und effektiv berücksichtigt werden.

Vorzugsweise ist die Regeleinheit zum automatischen Anpassen von Solldruckwerten, und insbesondere der Start-Solldruckwerte, für die Druckregelventile in Abhängigkeit vom Typ des Verteilergestänges und/oder dessen Ausstattung mit Ausbringorganen konfiguriert. Die Start-Solldruckwerte sind für bestimmte Typen und Ausstattungsvarianten weitgehend identisch. Somit kann eine Anpassung vor Ort bei Inbetriebnahme und/oder Umrüstung erfolgen und/oder aktualisiert werden.

Vorzugsweise ist die Regelvorrichtung zum automatischen Anpassen der Solldruckwerte und insbesondere der Start-Solldruckwerte der Druckregelventile für Zwischenstellungen des Verteilergestänges durch insbesondere lineare Interpolation zwischen den Solldruckwerten für die der jeweiligen Zwischenstellung einschließenden eingeklappten und ausgeklappten Stellungen ausgebildet. Zwischenstellungen lassen sich mit Sensoren an den Gelenken zwischen den einzeln klappbaren Segmenten des Verteilergestänges vergleichsweise einfach ermitteln. Somit ist die beschriebene vorteilhafte Entriegelung und Fortsetzung der Neigungsregelung auch dann möglich, falls ein bestimmtes Segment vor der Verriegelung nicht mehr vollständig eingeklappt oder ausgeklappt werden konnte.

Ferner sind die Druckregelventile und die Sperrventile hydraulische und/oder pneumatische Ventile. Dies ermöglicht eine einfache bewährte Regelungstechnik. Prinzipiell wären aber auch elektromagnetische Steuerelemente für die Neigungsregelung sowie deren Verriegelung und Entriegelung denkbar.

Ferner umfasst die Regelvorrichtung ein an die Regeleinheit angeschlossenes Stellorgan für das Verteilergestänge, wobei das Stellorgan wenigstens einen pneumatisch und/oder hydraulisch arbeitenden Zylinder, insbesondere einen doppeltwirkenden Hydraulikzylinder, umfasst.

Derartige Zylinder bilden kostengünstige und einfache Mittel zur Rückführung des Verteilergestänges bei einer auftretenden Neigung in seine horizontale Ausgangslage. Der doppeltwirkende Hydraulikzylinder kann beispielsweise mit einem Kolben ausgebildet sein, welcher beidseitig mit Druck beaufschlagbar ist, sodass die Bewegung des Verteilergestänges in einer entgegengesetzten Richtung beeinflusst werden kann. Das Stellorgan ist hierbei vorzugsweise an einem Rahmen angebracht, an welchem das Verteilergestänge befestigt ist und gehalten wird. Das Stellorgan kann hierbei zweckmäßigerweise auch direkt mit dem Verteilergestänge selbst verbunden sein. Dies hat den Vorteil, dass das Stellorgan direkt eine mechanische Kraftauswirkung auf das Verteilergestänge ausüben kann. Dadurch wird eine sichere und präzise Neigungsverstellung gewährleistet.

Vereinfachend gesagt können die Druckregelventile im symmetrisch ausgeklappten und horizontal ausgerichteten Zustand des Verteilergestänges einen identischen Solldruck aufweisen, insbesondere von 70 - 90 bar, und im asymmetrisch ausgeklappten und/oder geneigten Zustand des Verteilergestänges eine Solldruckdifferenz.

Eine Solldruckdifferenz ist allerdings auch möglich, wenn das Verteilergestänge symmetrisch geklappt ist, der Zylinder aber unterschiedlich große Kolben und Ringflächen aufweist, wie beispielsweise bei einem herkömmlichen Differenzialzylinder. Bei der Verwendung eines solchen asymmetrischen Zylinders ist es sogar denkbar, dass bei einem asymmetrisch geklappten Gestänge beidseitig ein nahezu identischer Druck herrscht. Es ist denkbar, dass das Flächenverhältnis, beispielsweise links zu rechts, für einen asymmetrischen Zylinder in der Regeleinheit durch entsprechende Programmierung in Form eines Korrekturfaktors berücksichtigt wird.

Nachfolgend wird ein beidseitig identischer Solldruck, also ein Druckunterschied von 0 bar, für symmetrische Klappzustände und eine horizontale Ausrichtung des Verteilergestänges lediglich zur Vereinfachung und Veranschaulichung beschrieben. Dies ist jedoch keine Voraussetzung für die erfindungsgemäße Vorgabe anfänglicher Solldruckwerte in Abhängigkeit von Klappzuständen.

Ein symmetrisch ausgeklapptes Verteilergestänge weist generell auf beiden Seiten der zentralen Aufhängung die gleiche Arbeitsbreite auf. Daher liegt auf dem Stellorgan an beiden Seiten der gleiche Druck durch die rechtsseitige und linksseitige Masse des Verteilergestänges an. Der Druckunterschied ist daher nahezu gleich 0 bar. Es ist dann zweckmäßig, die Druckregelventile auf ein identisches Druckniveau einzustellen und dieses beizubehalten.

Bei einer auftretenden Neigung des Verteilergestänges, kann der auftretende Druckunterschied an den Druckregelventilen über die Regelvorrichtung wieder an den ursprünglichen beidseitig identischen Druck angepasst werden. Es kann daher zu gleichen Anteilen in den jeweiligen Zylinderkammern der Druck erhöht, beziehungsweise erniedrigt werden, um das Verteilergestänge in die horizontale Ausgangslage zurückzuführen.

Bei asymmetrisch ausgeklapptem und/oder geneigt ausgerichtetem Verteilergestänge bewirkt ein Einhalten der Druckdifferenz, dass sich das Verteilergestänge nicht noch stärker zu der geneigten Seite hin bewegt. Die Ventile werden hierzu zweckmäßigerweise über die Regeleinheit derart mit einem elektrischen Signal angesteuert, dass der Druckunterschied aufrechterhalten wird und das Verteilergestänge nicht kippt.

Vorzugsweise sind die Druckregelventile in gleichen und/oder verschiedenen Stellungen unabhängig voneinander ein- und/oder verstellbar. Das bedeutet, dass die beiden Druckregelventile jeweils unabhängig über ein elektronisches Signal von der Regeleinheit angesteuert werden können und auf unterschiedliche Start-Drucksollwerte eingestellt werden können. Daher ist die Regelvorrichtung effizient sowohl für symmetrische, als auch für asymmetrische Klappzustände des Verteilergestänges verwendbar. Bei asymmetrischen Klappzuständen mit asymmetrischer Arbeitsbreite herrschen aufgrund der unterschiedlichen Masseverteilung zwangsläufig unterschiedliche Druckverhältnisse an den beiden Druckregelventilen. Durch deren unabhängige Verstellbarkeit kann auch ein asymmetrisches Verteilergestänge zuverlässig in der gewünschten, insbesondere horizontalen Lage über dem Boden gehalten werden.

Vorzugsweise ist die Regeleinheit zur beim Öffnen der Sperrventile oder direkt anschließend einsetzenden Neigungsregelung ausgebildet, welche den linksseitigen und rechtsseitigen Druck am Stellorgan mittels der Druckregelventile bei einer Abweichung von einer Sollneigung des Verteilergestänges anpasst, um die Neigung des Verteilergestänges, insbesondere kompensatorisch zur Wiederherstellung der Sollneigung, zu ändern. Damit lassen sich Abweichungen von der Sollneigung minimieren.

Im Rahmen der Erfindung wird weiterhin ein landwirtschaftliches Nutzfahrzeug zum Ausbringen von Material, wie Düngemittel, Pflanzenschutzmittel oder Saatgut, mit einem Verteilergestänge und einer Regelvorrichtung nach einem der vorhergehenden Ausführungsformen beansprucht. Mit der Regelvorrichtung kann die Neigung des Verteilergestänges relativ zum Boden effektiv beeinflusst werden. Ferner kann die Gefahr von unkontrollierten Bewegungen des Verteilergestänges, insbesondere beim Öffnen von Sperrventilen, verringert werden. Dadurch ist eine homogene Ausbringung des Materials gewährleistet.

Weiterhin wird im Rahmen der Erfindung ein Verfahren zum Betreiben eines landwirtschaftlichen Nutzfahrzeuges mit einem Verteilergestänge zum Ausbringen von Material, wie Düngemittel, Pflanzenschutzmittel und/oder Saatgut, mit einer Regeleinheit und mit dieser verbundene Druckregelventile zur Neigungsregelung des Verteilergestänges sowie mit Sperrventilen zum Arretieren des Verteilergestänges beansprucht.

Demnach wird u. a. für das Öffnen der Sperrventile wenigstens ein dem jeweiligen Klappzustand des Verteilergestänges zugeordneter Start-Solldruckwert für die Druckregelventile aus einem der Regeleinheit zugeordneten Datenspeicher ausgelesen. Ergänzend oder alternativ können dem wenigstens einen anfänglichen Solldruckwert zugeordnete elektrische Steuersignale für die Druckregelventile aus dem Datenspeicher ausgelesen werden.

Zu diesem Zweck können in der Regeleinheit ein Solldruck und/oder ein Sollsteuerstrom für das Druckregelventil hinterlegt sein. In der praktischen Anwendung gibt es dann für jedes Druckregelventil eine Kennlinie, mit der von einem Druckwert in einen zugehörigen Stromwert umgerechnet werden kann.

Ferner werden die Druckregelventile auf den zugehörigen anfänglichen Solldruck eingestellt, bevor die Sperrventile geöffnet werden. Damit lassen sich mögliche anfängliche Korrekturbewegungen des Verteilergestänges unmittelbar nach Öffnen der Sperrventile minimieren.

Vorzugsweise werden für einander spiegelbildlich entsprechende asymmetrische Klappzustände gemeinsame und insbesondere seitenunspezifische Start-Solldruckwerte im Datenspeicher abgelegt und daraus seitenspezifische Steuersignale in Abhängigkeit von der seitlichen Orientierung des jeweiligen Klappzustands berechnet. Start-Solldruckwerte werden dann beispielsweise nur für das linksseitig eingeklappte Verteilergestänge abgelegt und ausgelesen. Für rechtsseitig eingeklapptes Verteilergestänge können die Start-Solldruckwerte durch Spiegeln der gespeicherten Werte einfach berechnet werden. Bei einem Differenzialzylinder kann dabei das Flächenverhältnis des Zylinders berücksichtigt werden. Das heißt, Start-Solldruckwerte können für eine Seite erfasst und gespeichert werden. Beim darauf basierenden seitenverkehrten Spiegeln wird dann das Flächenverhältnis des Zylinders berücksichtigt.

Es können aber auch jeweils separate Start-Solldruckwerte für asymmetrisch spiegelbildliche Klappzustände im Datenspeicher abgelegt und ausgelesen werden. Es ist dann keine Umrechnung zur Spiegelung eines für eine Seite des Verteilergestänges gespeicherten Werts für die andere Seite notwendig.

Vorzugsweise werden ausgelesene und/oder berechnete linksseitige und rechtsseitige Start-Solldruckwerte unter Beibehalten ihres Verhältnisses zueinander an eine Gesamtsolldruckdifferenz angepasst. Es müssen dann nur Relativwerte des Start-Solldrucks für die unterschiedlichen Klappzustände gespeichert werden. Absolutwerte des Start-Solldrucks können dann einfach anhand der vorgegebenen Gesamtsolldruckdifferenz an die jeweilige Betriebssituation angepasst werden.

Die Druckregelventile werden vorzugsweise anhand einer bekannten Kennlinie elektronisch gesteuert auf den jeweiligen Sollwert eingestellt. Das heißt, Sollwerte werden zu diesem Zweck aus dem Datenspeicher ausgelesen und gegebenenfalls unter Berücksichtigung von Korrekturfaktoren und/oder der vorgegebenen Gesamtsolldruckdifferenz der Neigungsregelung umgerechnet. Anschließend wird über die bekannte Kennlinie der Druckregelventile das dem Sollwert entsprechende Steuersignal, insbesondere in Form eines Steuerstroms, auf die Druckregelventile geschaltet. Das Ventil schaltet daraufhin in der Weise, dass der gewünschte Druck an der entsprechenden Seite des Stellorgans ansteht. Damit kann der Druck auf das Verteilergestänge mittels der Druckregelventile beiderseits präzise an die jeweiligen Sollwerte angepasst werden und damit die Neigung des Verteilergestänges unter Berücksichtigung des aktuellen Klappzustands effektiv beeinflusst werden.

In einer weiteren bevorzugten Ausführungsform wird wenigstens eine maschinenspezifische Konstante bei der Ermittlung von Solldruckwerten berücksichtigt, beispielsweise durch Addieren und/oder Multiplizieren ausgelesener Start-Solldruckwerte mit der Konstante. Die Konstante kann beispielsweise an der Steuereinheit manuell eingegeben und/oder im Rahmen einer Werkstattdiagnose ermittelt werden. Fertigungstoleranzen, Hysterese-Effekte oder dergleichen können dadurch bei der Ansteuerung auf Basis der Kennlinie berücksichtigt werden.

Die Erfindung wird nachstehend mit weiteren Einzelheiten unter Bezug auf die beigefügten schematischen Zeichnungen näher erläutert. Es zeigen:
Fig. 1 einen Detailausschnitt auf in Verteilergestänge an einem Rahmen mit einer erfindungsgemäßen Regelvorrichtung;
Fig. 2a - 2d jeweils eine Heckansicht eines landwirtschaftlichen Nutzfahrzeuges mit einer Regelvorrichtung und einem symmetrischen Verteilergestänge nach einem erfindungsgemäßen Ausführungsbeispiel, sowie einen Detailausschnitt der Regelvorrichtung gemäß Fig. 1;
Fig. 3a - 3d jeweils eine Heckansicht eines landwirtschaftlichen Nutzfahrzeuges mit einer Regelvorrichtung und einem asymmetrischen Verteilergestänge nach einem weiteren erfindungsgemäßen Ausführungsbeispiel, sowie einen Detailausschnitt der Regelvorrichtung gemäß Fig. 1; und
Fig. 4a - 4d Heckansichten eines landwirtschaftlichen Nutzfahrzeuges mit einer Regelvorrichtung und einem asymmetrischen Verteilergestänge nach einem dritten erfindungsgemäßen Ausführungsbeispiel, sowie einen Detailausschnitt der Regelvorrichtung gemäß Fig. 1.

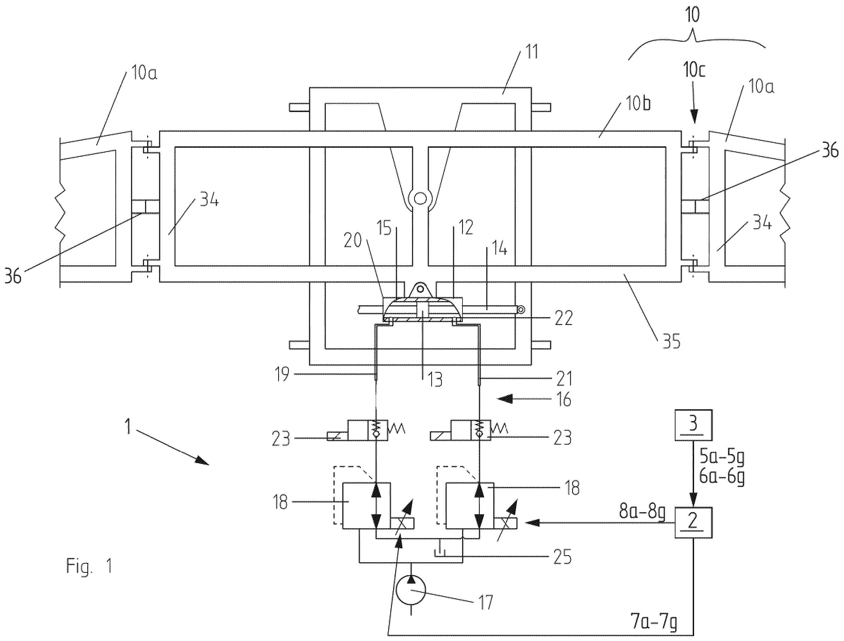

Die Fig. 1 zeigt eine Regelvorrichtung 1 für ein landwirtschaftliches Nutzfahrzeug, beispielsweise eine Feldspritze, mit schematisch angedeuteter Regeleinheit 2 und Datenspeicher 3. Gezeigt ist ferner ein an einem Rahmen 11 neigbar gelagertes Verteilergestänge 10 zum Ausbringen von Material, wie Düngemittel, Pflanzenschutzmittel oder Saatgut.

Die Regelvorrichtung 1 umfasst vorzugsweise zwei mit der Regeleinheit 2 verbundene Druckregelventile 18 zur Neigungsregelung des Verteilergestänges 10 und jeweils ein Sperrventil 23 pro Druckregelventil 18 zur Neigungsverriegelung des Verteilergestänges. Die Sperrventile 23 sind zwischen den Druckregelventilen 18 und einem Stellorgan 12 zur Neigungseinstellung des Verteilergestänges 10 angeordnet.

Der in der Fig. 1 dargestellte Rahmen 11 ist beispielhaft drehfest mit dem landwirtschaftlichen Nutzfahrzeug verbunden und kann zweckmäßigerweise höhenverstellbar ausgebildet sein. Der Rahmen 11 bildet die Aufhängung für das Verteilergestänge 10.

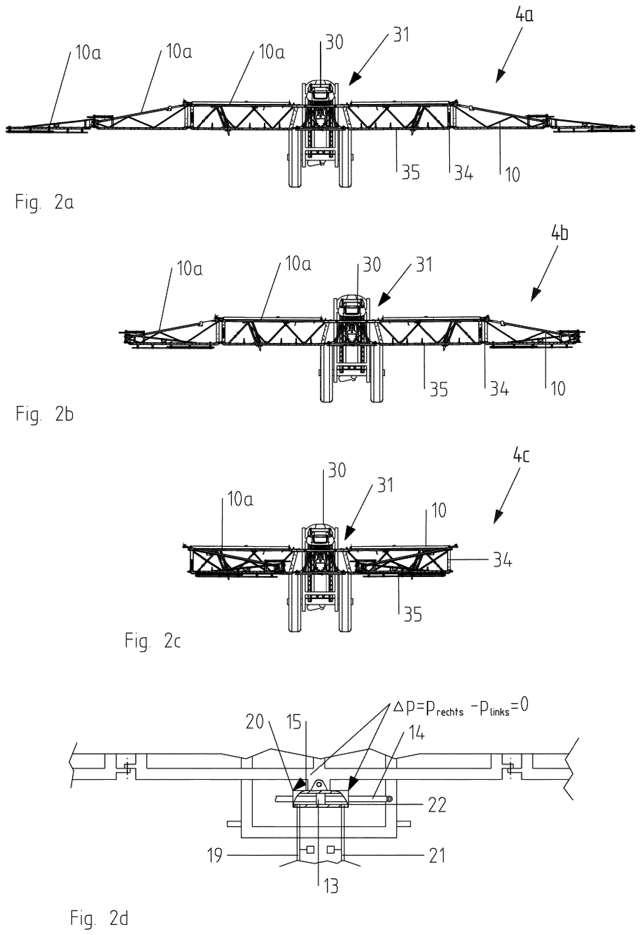

Der Detailausschnitt zeigt aus Vertikalstreben 34 und Querstreben 35 bestehende klappbare Segmente 10a und den mittleren Teil 10b des Verteilergestänges 10. Dazwischen sowie zwischen benachbarten Segmenten 10a sind an Gelenken 10c Sensoren 36 zur Ermittlung von Klappzuständen 4a - 4g angeordnet, siehe hierzu die Beispiele in den Fig. 2a - 2c, 3a - 3c und 4a - 4c. Die Sensoren 36 können beispielsweise mit der Regeleinheit 2 verbundene Potentiometer oder dergleichen sein.

Den Klappzuständen 4a - 4g zugeordnet sind je ein linksseitiger Solldruckwert 5a - 5g und ein rechtsseitiger Solldruckwert 6a - 6g für die Verbraucherseite der Druckregelventile 18 zum Stellorgan 12 hin. Die Neigung des Verteilergestänges 10 wird mit dem Stellorgan 12 eingestellt, indem dort im Wesentlichen die beiden Solldruckwerte 5a - 5g, 6a - 6g anliegen. Das Stellorgan 12 ist einerseits direkt mit dem Rahmen 11 und andererseits direkt mit dem Verteilergestänge 10 mechanisch verbunden.

Das Stellorgan 12 ist beispielsweise als doppeltwirkender Hydraulikzylinder ausgebildet, der einen Kolben 13 in einem Gehäuse 15 aufweist, welcher beidseitig mit Druck beaufschlagbar ist. Auf beiden Seiten des Kolbens 13 sind Kolbenstangen 14 angeordnet. Eine der beiden Kolbenstangen 14 ist mit dem Rahmen 11 mechanisch verbunden. Die andere Kolbenstange 14 weist ein freies Ende auf. Die Kraftübertragung vom Rahmen 11 auf das Verteilergestänge 10 erfolgt daher durch das Stellorgan 12 in direkter Weise.

Generell kann das Stellorgan auch durch einen Zylinder gebildet sein, welcher auf der linken Seite eine andere Fläche aufweist als auf der rechten Seite. Beispielsweise ist ein Zylinder denkbar, welcher eine Ring- und eine Kolbenfläche mit unterschiedlichen Flächen aufweist. Unterschiedliche Wirkflächen des Drucks auf der linken und rechten Kolbenseite werden dann durch entsprechend programmierte Druckanpassungen in der Regeleinheit 2 berücksichtigt.

Zur Kraftübertragung und damit zur Neigungseinstellung ist das Stellorgan 12 mit einem Hydraulikkreislauf 16 verbunden. Der Hydraulikkreislauf 16 ist durch einen offenen Kreislauf gebildet, welcher ein Hydraulikreservoir 25 und eine Pumpe 17 umfasst. Zwischen der Pumpe 17 und dem Hydraulikreservoir 25 einerseits und dem Stellzylinder 12 andererseits sind zwei Druckregelventile 18 angeordnet. Anders gesagt verbinden die Druckregelventile 18 die Pumpe 17 und das Hydraulikreservoir 25 verbraucherseitig mit den beiden Druckseiten 20, 22 des Stellorgans 12. Hierzu weist der Hydraulikkreislauf 16 erste und zweite Zuführleitungen 19, 21 zwischen dem Stellorgan 12 und dem jeweiligen Druckregelventil 18 auf.

Die Druckregelventile 18 erhalten von der Regeleinheit 2 ein linksseitiges elektrisches Steuersignal 7a - 7g und ein rechtsseitiges Steuersignal 8a - 8g, insbesondere in Form eines Steuerstroms, entsprechend einer in der Regeleinheit 2 abgelegten Kennlinie der Druckregelventile 18 und dem jeweiligen rechtsseitigen Solldruckwert 5a - 5g sowie linksseitigen Solldruckwert 6a - 6g. Die Druckregelventile 18 halten dann beide verbraucherseitigen Drücke auf dem jeweiligen Solldruckwert 5a - 5g, 6a - 6g. Die Solldruckwerte 5a - 5g, 6a - 6g können paarweise den Klappzuständen 4a - 4g des Verteilergestänges 10 zugeordnet sein.

Die Solldruckwerte 5a - 5g, 6a - 6g und/oder die Steuersignale 7a - 7g, 8a - 8g sind im Datenspeicher 3 abgelegt und können mittels maschinenspezifischer Konstanten und/oder anwendungsspezifischer Messwerte, wie beispielsweise aktueller Neigungswerte für das Verteilergestänge 10, verrechnet werden. Beispielsweise derart, dass sich die Solldruckwerte 5a - 5g, 6a - 6g jeweils paarweise zu einer vorgegebenen Gesamtsolldruckdifferenz ergänzen.

Die Figuren 2a - 2c zeigen jeweils eine schematische Heckansicht einer Maschine 31, die als Feldspritze ausgebildet ist. Die Feldspritze kann von einem Zugfahrzeug gezogen werden, selbstfahrend sein oder an ein landwirtschaftliches Nutzfahrzeug angebaut sein. Den Figuren 2a - 2c ist gemeinsam, dass die Maschine 31 ein Verteilergestänge 10 und einen Vorratsbehälter 30 umfasst, in dem zu verteilendes Material, wie beispielsweise Düngemittel, Pflanzenschutzmittel oder Saatgut, untergebracht ist.

Das Verteilergestänge 10 weist hierzu Sprühdüsen auf, die an der Unterseite des Verteilergestänges 10 entlang angeordnet sind. Die Sprühdüsen können durch ein Schlauchsystem mit einer Pumpe und dem Vorratsbehälter 30 verbunden sein.

Das Verteilergestänge 10 ist vorteilhafterweise für den Straßenverkehr, zum Einstellen von Teilarbeitsbreiten und/oder zum Umfahren von Hindernissen klappbar ausgestaltet.

Die Fig. 2a - 2c unterscheiden sich durch die Breite des Verteilergestänges 10. Hierbei ist in Fig. 2a das Verteilergestänge 10 gemäß einem ersten Klappzustand 4a vollständig ausgeklappt. Es umfasst auf jeder Seite des Gestänges beispielsweise drei klappbare Segmente 10a. Die Fig. 2b zeigt das Verteilergestänge 10 mit seinen Querstreben 35 und Vertikalstreben 34 in einem zweiten Klappzustand 4b mit beiderseits eingeklappten äußersten Segmenten 10a. In Fig. 2c sind entsprechend einem dritten Klappzustand 4c die äußeren beiden Segmente 10a sowohl linksseitig als auch rechtsseitig eingeklappt.

Das Verteilergestänge 10 ist zentral an einem Rahmen der Maschine 30 aufgehängt. Eine Verstellung der Gesamtneigung des Verteilergestänges 10, also eine Verstellung des ausgeklappten, geraden Verteilergestänges 10 ist durch die Regelvorrichtung 1 möglich.

Fig. 2d zeigt hierzu einen Detailausschnitt der Regelvorrichtung gemäß Fig. 1 mit den eingestellten Druckverhältnissen für das in den Klappzuständen 4a - 4c jeweils symmetrisch gelagerte Verteilergestänge 10. Die Druckdifferenz Δp zwischen der linksseitigen ersten Druckseite 20 und der rechtsseitigen zweiten Druckseite 22 des Kolbens 13 ist dann gleich Null. Beide Druckseiten sind daher auf denselben Druck eingestellt. Für ein symmetrisch gelagertes Verteilergestänge 10 kann dieser Druck beispielsweise zwischen 70 und 90 bar liegen.

Bei der Verwendung eines Differenzialzylinders läge dagegen eine Druckdifferenz vor. Das zugehörige Druckverhältnis entspräche dann dem Kehrwert des Flächenverhältnisses von Kolben- und Ringfläche.

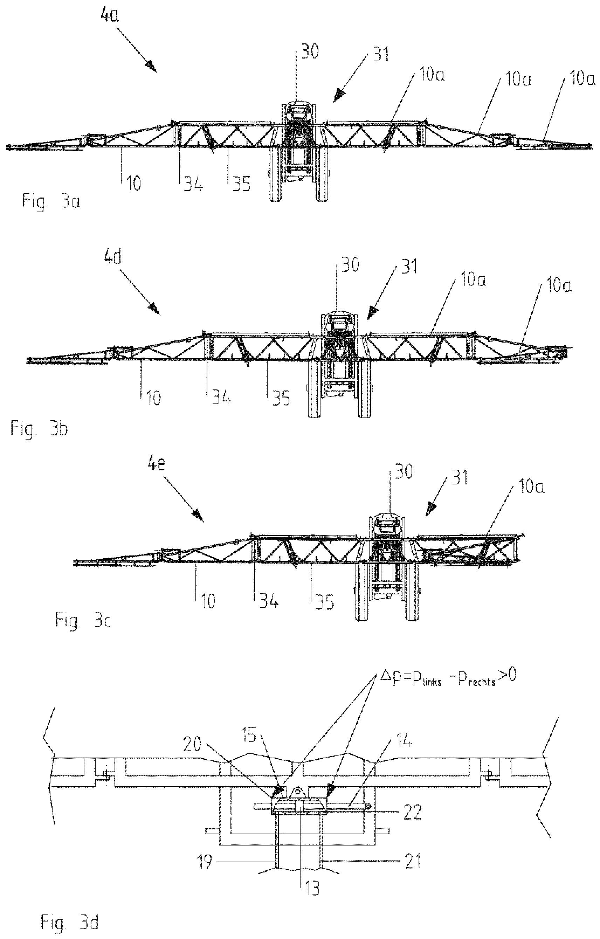

Die Fig. 3a - 3c zeigen jeweils in schematischer Weise eine Heckansicht einer Maschine 31, welche als Feldspritze ausgebildet ist. Die Feldspritze ist ähnlich wie in Fig. 2 ausgebildet mit einem Verteilergestänge 10 und einen Vorratsbehälter 30, in dem auszubringendes Material untergebracht ist. Die Figuren 3a - 3c unterscheiden sich durch die Arbeitsbreite des Verteilergestänges 10. Das Verteilergestänge 10 ist in Fig. 3a beispielhaft durch drei Segmente 10a zu beiden Seiten des Vorratsbehälters 30 gebildet entsprechend dem Klappzustand 4a.

In Fig. 3b sind rechtsseitig nur zwei Segmente 10a ausgeklappt, da sich das äußere Segment 10a im eingeklappten Zustand befindet. Dies entspricht einem vierten Klappzustand 4d.

In Fig. 3c ist rechtsseitig nur ein Segment 10a ausgeklappt, während die äußeren beiden eingeklappt sind. Dies entspricht einem fünften Klappzustand 4e.

Das Verteilergestänge 10 ist in den Klappzuständen 4d, 4e demnach asymmetrisch gelagert, da in den Figuren 3b und 3c auf beiden Seiten des Vorratsbehälters 30 nicht dieselbe Anzahl an Segmenten 10a im ausgeklappten Zustand ist. Generell gilt für ein asymmetrisches Verteilergestänge 10, dass es sich zu beiden Seiten in der Anzahl der ausgeklappten Segmente 10a oder, generell gesagt, in der Arbeitsbreite unterscheidet.

Ebenso kann ein asymmetrisches Verteilergestänge vorliegen, wenn ein bestimmtes Gelenk 10c weder vollständig eingeklappt noch vollständig ausgeklappt ist, sich also in einer Zwischenstellung befindet. Zwischenstellungen können von den Sensoren 36 erkannt und/oder der Klappwinkel zwischen den gelenkig verbundenen Segmenten 10a gemessen werden.

Es kommt bei den Klappzuständen 4d, 4e in der Regel zu einer Druckdifferenz Δp. Diese entsteht dadurch, dass das Verteilergestänge 10 rechtsseitig und linksseitig eine unterschiedliche Masseverteilung aufweist. Diese unterschiedliche Masseverteilung könnte auch bei dem symmetrisch gelagerten Verteilergestänge 10 im Klappzustand 4a gemäß Fig. 3a entstehen, wenn beispielsweise eine linksseitige Neigung vorliegt. Eine Verstellung der Gesamtneigung des Verteilergestänges 10 ist durch die Regelvorrichtung 1 möglich.

Fig. 3d zeigt hierzu einen Detailausschnitt der Regelvorrichtung 1 gemäß Fig. 1 mit den eingestellten Druckverhältnissen für das asymmetrisch gelagerte oder linksseitig geneigte Verteilergestänge 10. Die Druckdifferenz Δp zwischen der linksseitigen ersten Druckseite 20 und der rechtsseitigen zweiten Druckseite 22 des Stellorgans 12 ist größer Null. Demnach ist der linksseitige Druck größer als der rechtsseitige Druck.

Soll nun beispielsweise nach einem nur teilweisen Ausklappen oder Einklappen des Verteilergestänges 10, also bei einer Situation wie beispielsweise im Klappzustand 4e gemäß Fig. 3c, bei geschlossenen Sperrventilen 23 ein abruptes Absacken des Verteilergestänges 10 nach dem Öffnen der Sperrventile 23 vermieden werden, also beim Entriegeln des Verteilergestänges 10, so werden die Ventile 18 zweckmäßigerweise über die Regeleinheit 1 derart mit einem elektrischen Signal angesteuert, dass die Druckdifferenz nach dem Öffnen der Sperrventile 23 aufrechterhalten wird und sich die Neigung des Verteilergestänges 10 beim Öffnen der Sperrventile 23 nicht verstellt.

Zu diesem Zweck werden die Druckregelventile 18 auf geeignete anfängliche Solldruckwerte eingestellt. Hierdurch wird beim Entriegeln des Verteilergestänges 10 erreicht, dass beim Öffnen der Sperrventile 23 der zwischen den Sperrventilen 23 und der jeweiligen Seite des Stellorgans 12 herrschende Druck zumindest annähernd auch vor dem jeweiligen Sperrventil 23 ansteht.

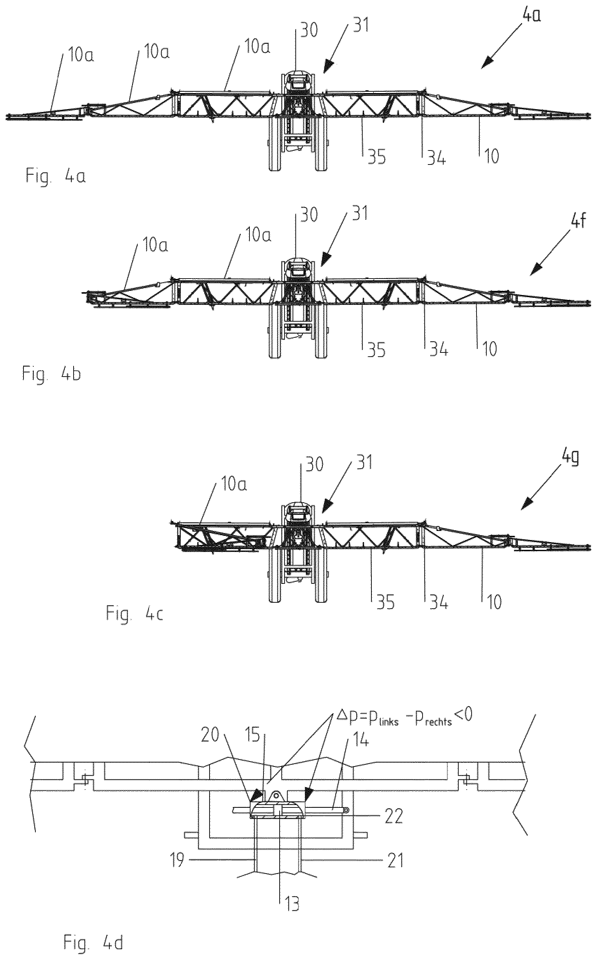

Die Figuren 4a - 4c zeigen jeweils in schematischer Weise eine Heckansicht einer Maschine 31, welche als Feldspritze ausgebildet ist. Die Feldspritze ist ähnlich wie in Fig. 2 ausgebildet und umfasst ein Verteilergestänge 10 und einen Vorratsbehälter 30 mit auszubringendem Material. Die Figuren 4a - 4c unterscheiden sich durch die Arbeitsbreite des Verteilergestänges 10. Das Verteilergestänge 10 umfasst in Fig. 4a beispielhaft drei klappbare Segmente 10a zu beiden Seiten des Vorratsbehälters 30.

In einem sechsten Klappzustand 4f gemäß Fig. 4b sind es linksseitig nur zwei ausgeklappte Segmente 10a; das äußere Segment 10a ist eingeklappt. In einem siebten Klappzustand 4g gemäß Fig. 4c ist linksseitig nur ein Segment 10a ausgeklappt; die beiden äußeren Segmente 10a sind eingeklappt.

Das Verteilergestänge 10 ist demnach, wie auch in den Figuren 3b und 3c, asymmetrisch gelagert, da es in den Klappzuständen 4f und 4g der Figuren 4b und 4c auf beiden Seiten des Vorratsbehälters 30 nicht dieselbe Anzahl an ausgeklappten Segmenten 10a aufweist. Es kommt daher ebenso zu einer Druckdifferenz Δp. Die Druckdifferenz Δp kann beispielhaft auch im Klappzustand 4a gemäß Fig. 4a bei symmetrisch gelagertem Verteilergestänge 10 entstehen, wenn eine rechtsseitige Neigung auftritt. Eine Verstellung der Gesamtneigung des Verteilergestänges 10 ist wiederum durch die Regelvorrichtung 1 möglich.

Fig. 4d zeigt hierzu einen Detailausschnitt der Regelvorrichtung gemäß Fig. 1 mit den eingestellten Druckverhältnissen für das asymmetrisch gelagerte oder rechtsseitig geneigte Verteilergestänge 10 gemäß Fig. 4a - 4c. Die Druckdifferenz Δp zwischen der linksseitigen ersten Druckseite 20 und der rechtsseitigen zweiten Druckseite 22 des Stellorgans 13 ist negativ. Demnach ist der linksseitige Druck kleiner als der rechtsseitige Druck. Damit sich das Verteilergestänge 10 bei einem Öffnen der Sperrventile 23 nicht auf der rechten Seite nach unten bewegt, muss diese Druckdifferenz vorteilhafterweise über die Druckregelventile 18 beim Öffnen der Sperrventile 23 gehalten werden.

Generell kann die Regelvorrichtung 1 zur Neigungsregelung und Vermeidung von unkontrollierten Bewegungen effizient für symmetrische oder asymmetrische Verteilergestänge mit einer beliebigen Arbeitsbreite verwendet werden.

Insbesondere ist die Regelvorrichtung 1 derart ausgebildet, dass die Druckregelventile 18 zum Zeitpunkt des Öffnens der Sperrventile 23 zumindest annähernd auf die zugehörigen anfänglichen Solldruckwerte 5a - 5f, 6a - 6f eingestellt sind, also beispielsweise für den Klappzustand 4d auf die anfänglichen Solldruckwerte 5d und 6d für die linke und rechte Seite des Verteilergestänges 10.

Hierdurch lässt sich verhindern, dass beispielsweise bei einem asymmetrischen Ausklappen des Verteilergestänges 10, wie in Fig. 4a - 4c dargestellt, bei geschlossenen Sperrventilen 23 das Verteilergestänge 10 nach dem Öffnen der Sperrventile 23 eine unkontrollierte Bewegung im Uhrzeigersinn ausführt, oder bei einer Situation gemäß Fig. 3a - 3c eine Bewegung entgegen des Uhrzeigersinns.

Die Druckregelventile 18 werden auf ihre zugehörigen anfänglichen Solldruckwerte 5a - 5f, 6a - 6f eingestellt, indem die Regeleinheit 2 die entsprechenden Steuersignale 7a - 7g, 8a - 8g an den Druckregelventilen 18 anlegt.

Wie die Fig. 3a - 3d und 4a - 4d im Vergleich zeigen, gibt es spiegelbildliche asymmetrische Anordnungen des Verteilergestänges 10 mit gegeneinander vertauschten Seiten. Es wäre daher prinzipiell ausreichend, lediglich für die Klappzustände 4d, 4e zugehörige anfängliche Solldruckwerte 5d und 6d sowie 5e und 6e zu ermitteln und abzuspeichern. Für die spiegelbildlich entsprechenden Klappzustände 4f, 4g wären die anfänglichen Solldruckwerte 5f und 6f sowie 5g und 6g dann seitenverkehrt anzuwenden. Gleiches gilt für die zugehörigen Steuersignale 7f und 8f sowie 7g und 8g. Bei einem Differenzialzylinder müssten zusätzlich die unterschiedlichen Zylinderflächen auf der linken und rechten Seite berücksichtigt werden, wie weiter oben bereits beschrieben wurde.

Das Prinzip der steuerungstechnischen Spiegelung von Klappzuständen 4d - 4g lässt sich auch für andere, nicht dargestellte Klappzustände anwenden, einschließlich solcher mit wenigstens einer Zwischenstellung zwischen benachbarten Segmenten 10a. Es wäre dann nur ein vereinfachter seitenunspezifischer Datensatz für unterschiedliche Klappzustände abzuspeichern und dann auf die jeweils vorliegende Seitenorientierung des Klappzustands anzuwenden, das heißt gegebenenfalls zu spiegeln.

Es können auch weitere Solldruckwerte für Zwischenstellungen von Gelenken 10c zwischen benachbarten Segmenten 10a gespeichert werden und/oder berechnet werden. Beispielsweise könnten separate Solldruckwerte für geeignete Winkelintervalle an den Gelenken 10c gespeichert und/oder berechnet werden. Auch eine Interpolation zwischen vollständig eingeklappten und ausgeklappten benachbarten Segmenten 10a ist praktikabel. Beispielsweise wäre eine lineare Interpolation für bestimmte Winkelintervalle an einem Gelenk 10c und/oder zwischen vollständigem Ein-/Ausklappen insbesondere des jeweils äußeren Segments 10a denkbar.

Bei der Berechnung von Solldruckwerten 5a - 5g, 6a - 6g sind systematische maschinenbedingte Korrekturen mittels Konstanten ebenso möglich wie dynamische Korrekturen beispielsweise aufgrund einer aktuellen Neigung des Verteilergestänges 10 bei dessen Verriegelung / Entriegelung. Dafür nötige Neigungssensoren sind an sich bekannt und können problemlos von der Regeleinheit 2 ausgewertet werden.

Derartige Konstanten werden beispielsweise durch Addition und/oder Multiplikation bei der Berechnung der Solldruckwerte 5a - 5g, 6a - 6g und/oder der Steuersignale 7a - 7g, 8a -8g in der Regeleinheit 2 berücksichtigt.

Üblicherweise wird für die Betätigung des Stellelements 12 eine praktikable Gesamtsolldruckdifferenz vorgegeben und bei der Ansteuerung der Druckregelventile 18 im laufenden Betrieb eingehalten. Entsprechend werden die Solldruckwerte 5a - 5g, 6a - 6g bzw. die Steuersignale 7a - 7g, 8a - 8g als Wertepaare mit konstantem Verhältnis von linker zu rechter Seite so angehoben oder abgesenkt, dass sie sich zur Gesamtsolldruckdifferenz ergänzen.

Somit lassen sich im laufenden Betrieb weitgehend gleichmäßige Druckbedingungen am Stellelement 12 herstellen. Insbesondere beim Entriegeln des Verteilergestänges 10, also beim Öffnen der Sperrventile 23, können ruckartige Neigungsbewegungen des Verteilergestänges 10 vermieden werden und die Neigungsregelung bei einem geeigneten anfänglichen Solldruck und einem entsprechenden verbraucherseitigen Druck fortgesetzt werden.

Die anfänglichen Solldruckwerte 5a - 5g, 6a - 6g und/oder 7a - 7g, 8a - 8g können in der Regeleinheit 2 spezifisch für unterschiedliche Typen und Konfiguration von Verteilergestängen 10 mit Ausbringorganen oder dergleichen vorgehalten werden. Entsprechend kann die beschriebene Neigungsregelung schnell an bestimmte Maschinenkonfigurationen angepasst werden.

## Patentansprüche

1. Regelvorrichtung (1) für ein landwirtschaftliches Nutzfahrzeug mit einem beidseitig klappbaren Verteilergestänge (10) zum Ausbringen von Material, wie Düngemittel, Pflanzenschutzmittel oder Saatgut, umfassend eine Regeleinheit (2) und mit dieser verbundene Druckregelventile (18) zur Neigungsregelung des Verteilergestänges (10), wobei jedem Druckregelventil (18) ein Sperrventil (23) zum Verriegeln des Verteilergestänges (10) sowie der Regeleinheit (2) ein Datenspeicher (3) zugeordnet ist, in dem unterschiedlichen Klappzuständen (4a-4g) des Verteilergestänges (10) zugeordnete anfängliche Solldruckwerte (5a-5g, 6a-6g) der Druckregelventile (18) und/oder den anfänglichen Solldruckwerten (5a-5g, 6a-6g) zugeordnete elektrische Steuersignale (7a-7g, 8a-8g) abgelegt sind, wobei die Druckregelventile (18) und die Sperrventile (23) hydraulische und/oder pneumatische Ventile sind, wobei die Regelvorrichtung (1) ein an diese angeschlossenes Stellorgan (12) für das Verteilergestänge (10) umfasst, wobei das Stellorgan (12) wenigstens einen pneumatisch und/oder hydraulisch arbeitenden Zylinder umfasst, wobei die Regeleinheit (2) so konfiguriert ist, dass die Druckregelventile (18) beim Öffnen der Sperrventile (23) an den zugehörigen anfänglichen Solldruck (5a-5g, 6a-6g) angepasst sind, und wobei das Verteilergestänge (10) klappbare Segmente (10a) sowie an dazwischen liegenden Gelenken (10c) jeweils Sensoren (36) zur Ermittlung der Klappzustände (4a - 4g) umfasst.

2. Regelvorrichtung nach Anspruch 1, wobei die Druckregelventile (18) zum Einhalten eines verbraucherseitigen Drucks in Abhängigkeit von einem elektrischen Steuersignal (7a-7g, 8a-8g), insbesondere Steuerstrom, ausgebildet sind.

3. Regelvorrichtung nach einem der vorigen Ansprüche, wobei die Sensoren (36) zur Ermittlung der Klappzustände (4a - 4g) Potentiometer sind.

4. Regelvorrichtung nach einem der vorigen Ansprüche, wobei die Regeleinheit (2) zum Messen und/oder zur Eingabe von Druckwerten für unterschiedliche Klappzustände (4a - 4g) konfiguriert ist sowie zur darauf basierenden Berechnung von anfänglichen Solldruckwerten (5a-5g, 6a-6g) und deren Zuordnung zu den Klappzuständen des Verteilergestänges (10).

5. Regelvorrichtung nach einem der vorigen Ansprüche, wobei die Regeleinheit (2) zum Addieren und/oder Multiplizieren ausgelesener anfänglicher Solldruckwerte (5a-5g, 6a-6g) mit wenigstens einer insbesondere einstellbaren Konstante konfiguriert ist.

6. Regelvorrichtung nach einem der vorigen Ansprüche, wobei die Regeleinheit (2) zum automatischen Anpassen der anfänglichen Solldruckwerte (5a-5g, 6a-6g) für die Druckregelventile (18) in Abhängigkeit vom Typ des Verteilergestänges (10) und/oder dessen Ausstattung mit Ausbringorganen konfiguriert ist.

7. Regelvorrichtung nach einem der vorigen Ansprüche, wobei die Regeleinheit (2) zum automatischen Anpassen der anfänglichen Solldruckwerte der Druckregelventile (18) für Zwischenstellungen des Verteilergestänges (10) ausgebildet ist, insbesondere durch lineare Interpolation zwischen den Solldruckwerten (5a-5g, 6a-6g) für die die Zwischenstellung einschließenden vollständig eingeklappten / ausgeklappten Stellungen.

8. Regelvorrichtung nach einem der vorigen Ansprüche, wobei das Stellorgan (12) einen doppeltwirkenden Hydraulikzylinder umfasst.

9. Regelvorrichtung nach einem der vorigen Ansprüche, wobei die Regeleinheit (2) zur beim und/oder direkt nach dem Öffnen der Sperrventile (23) einsetzenden Neigungsregelung ausgebildet ist, welche den linksseitigen und rechtsseitigen Druck am Stellorgan (12) mittels der Druckregelventile (18) bei einer Abweichung von einer Sollneigung anpasst, um die Neigung des Verteilergestänges (10), insbesondere kompensatorisch zur Wiederherstellung der Sollneigung, zu ändern.

10. Landwirtschaftliches Nutzfahrzeug zum Ausbringen von Material, wie Düngemittel, Pflanzenschutzmittel oder Saatgut, mit einem Verteilergestänge (10) und einer Regelvorrichtung (1) nach einem der vorigen Ansprüche.

11. Verfahren zum Betreiben eines landwirtschaftlichen Nutzfahrzeuges mit einem Verteilergestänge (10) zum Ausbringen von Material, wie Düngemittel, Pflanzenschutzmittel oder Saatgut, umfassend eine Regeleinheit (2) und mit dieser verbundene Druckregelventile (18) zur Neigungsregelung des Verteilergestänges (10) sowie Sperrventile (23) zum Arretieren des Verteilergestänges (10), wobei dieses klappbare Segmente (10a) sowie an dazwischen liegenden Gelenken (10c) jeweils Sensoren (36) zur Ermittlung von Klappzuständen (4a - 4g) des Verteilergestänges (10) umfasst, wobei die Druckregelventile (18) und die Sperrventile (23) hydraulische und/oder pneumatische Ventile sind, wobei die Regelvorrichtung (1) ein an diese angeschlossenes Stellorgan (12) für das Verteilergestänge (10) umfasst, wobei das Stellorgan (12) wenigstens einen pneumatisch und/oder hydraulisch arbeitenden Zylinder umfasst, wobei für das Öffnen der Sperrventile (23) wenigstens ein dem jeweiligen Klappzustand (4a - 4g) des Verteilergestänges (10) zugeordneter anfänglicher Solldruckwert (5a-5g, 6a-6g) für die Druckregelventile (18) aus einem der Regeleinheit (2) zugeordneten Datenspeicher (3) ausgelesen wird, und wobei die Druckregelventile (18) auf den zugehörigen anfänglichen Solldruck (5a-5g, 6a-6g) eingestellt werden, bevor die Sperrventile (23) geöffnet werden.

12. Verfahren nach Anspruch 11, wobei für einander spiegelbildlich entsprechende asymmetrische Klappzustände (4d - 4g) gemeinsame Start-Solldruckwerte (5d-5g) im Datenspeicher (3) abgelegt werden und daraus seitenspezifische Steuersignale (7d-7g, 8d-8g) in Abhängigkeit von der seitlichen Orientierung des jeweiligen Klappzustands (4d - 4g) berechnet werden.

## Claims

1. Control device (1) for an agricultural utility vehicle with a distributor boom (10) that can be folded on both sides for spreading material, such as fertilizer, plant protectant or seed, comprising a control unit (2) and pressure control valves (18) connected thereto for controlling the inclination of the distributor boom (10), wherein each pressure control valve (18) is assigned a check valve (23) for locking the distributor boom (10), and the control unit (2) is assigned a data memory (3), in which initial target pressure values (5a-5g, 6a-6g) of the pressure control valves (18) assigned to different folding states (4a-4g) of the distributor boom (10) and/or electrical control signals (7a-7g, 8a-8g) assigned to the initial target pressure values (5a-5g, 6a-6g) are stored, wherein the pressure control valves (18) and the check valves (23) are hydraulic and/or pneumatic valves, wherein the control device (1) comprises an actuator (12), which is connected thereto, for the distributor boom (10), wherein the actuator (12) comprises at least one pneumatically and/or hydraulically operating cylinder, wherein the control unit (2) is configured such that the pressure control valves (18) are adapted to the associated initial target pressure (5a-5g, 6a-6g) when the check valves (23) are opened, and wherein the distributor boom (10) comprises foldable segments (10a) and, at joints (10c) located therebetween, sensors (36) for determining the folding states (4a - 4g).

2. Control device according to claim 1, wherein the pressure control valves (18) are designed to maintain a consumer-side pressure depending on an electrical control signal (7a-7g, 8a-8g), in particular a control current.

3. Control device according to either of the preceding claims, wherein the sensors (36) for determining the folding states (4a - 4g) are potentiometers.

4. Control device according to any of the preceding claims, wherein the control unit (2) is configured to measure and/or input pressure values for different folding states (4a - 4g) and to calculate initial target pressure values (5a-5g, 6a-6g) on the basis thereof and to assign them to the folding states of the distributor boom (10).

5. Control device according to any of the preceding claims, wherein the control unit (2) is configured to add and/or multiply read-out initial target pressure values (5a-5g, 6a-6g) with at least one in particular adjustable constant.

6. Control device according to any of the preceding claims, wherein the control unit (2) is configured to automatically adapt the initial target pressure values (5a-5g, 6a-6g) for the pressure control valves (18) depending on the type of distributor boom (10) and/or its equipment with spreader elements.

7. Control device according to any of the preceding claims, wherein the control unit (2) is designed to automatically adapt the initial target pressure values of the pressure control valves (18) for intermediate positions of the distributor boom (10), in particular by linear interpolation between the target pressure values (5a-5g, 6a-6g) for the fully folded/unfolded positions between which the intermediate position is present.

8. Control device according to any of the preceding claims, wherein the actuator (12) comprises a double-acting hydraulic cylinder.

9. Control device according to any of the preceding claims, wherein the control unit (2) is designed for inclination control which starts during and/or directly after the check valves (23) are opened, and which adjusts the left-hand and righthand pressure on the actuator (12) by means of the pressure control valves (18) in the event of a deviation from a target inclination, in order to change the inclination of the distributor boom (10), in particular in a compensatory manner to restore the target inclination.

10. Agricultural utility vehicle for spreading material, such as fertilizer, plant protectant or seed, having a distributor boom (10) and a control device (1) according to any of the preceding claims.

11. Method for operating an agricultural utility vehicle with a distributor boom (10) for spreading material, such as fertilizer, plant protectant or seed, comprising a control unit (2) and pressure control valves (18) connected thereto for controlling the inclination of the distributor boom (10) as well as check valves (23) for locking the distributor boom (10), wherein the distributor boom comprises foldable segments (10a) and, at joints (10c) located therebetween, sensors (36) for determining folding states (4a - 4g) of the distributor boom (10), wherein the pressure control valves (18) and
the check valves (23) are hydraulic and/or pneumatic valves, wherein the control device (1) comprises an actuator (12), which is connected thereto, for the distributor boom (10), wherein the actuator (12) comprises at least one pneumatically and/or hydraulically operating cylinder, wherein for opening the check valves (23) at least one initial target pressure value (5a-5g, 6a-6g) for the pressure control valves (18) assigned to the particular folding state (4a - 4g) of the distributor boom (10) is read out from a data memory (3) assigned to the control unit (2), and wherein the pressure control valves (18) are set to the associated initial target pressure (5a-5g, 6a-6g) before the check valves (23) are opened.

12. Method according to claim 11, wherein common starting target pressure values (5d-5g) are stored in the data memory (3) for asymmetric folding states (4d - 4g) corresponding to one another in mirror image, and side-specific control signals (7d-7g, 8d-8g) are calculated therefrom depending on the lateral orientation of the particular folding state (4d - 4g).

## Revendications

1. Dispositif de régulation (1) pour un véhicule utilitaire agricole comportant une rampe de distribution (10) repliable des deux côtés destinée à épandre des matières, telles que des engrais, des produits phytosanitaires ou des semences, comprenant une unité de régulation (2) et des vannes de régulation de pression (18) raccordées à celle-ci pour la régulation de l'inclinaison de la rampe de distribution (10), une vanne d'arrêt (23) destinée à verrouiller la rampe de distribution (10) étant associée à chaque vanne de régulation de pression (18) et une mémoire de données (3), dans laquelle sont enregistrées des valeurs de pression de consigne initiales (5a-5 g, 6a-6g) des vannes de régulation de pression (18) associées à différents états de repliage (4a-4g) de la rampe de distribution (10) et/ou des signaux de commande électriques (7a-7 g, 8a-8g) associés aux valeurs de pression de consigne initiales (5a-5 g, 6a-6g), étant associée à l'unité de régulation (2), les vannes de régulation de pression (18) et les vannes d'arrêt (23) étant des vannes hydrauliques et/ou pneumatiques, le dispositif de régulation (1) comprenant un organe de réglage (12) raccordé à celui-ci pour la rampe de distribution (10), l'organe de réglage (12) comprenant au moins un vérin fonctionnant de manière pneumatique et/ou hydraulique, l'unité de régulation (2) étant configurée de telle sorte que les vannes de régulation de pression (18) sont adaptées à la pression de consigne initiale (5a-5 g, 6a-6g) associée lors de l'ouverture des vannes d'arrêt (23) et la rampe de distribution (10) comprenant des segments repliables (10a) ainsi que des capteurs (36) respectifs sur des articulations (10c) situées entre eux pour la détermination des états de repli (4a-4g).

2. Dispositif de régulation selon la revendication 1, les vannes de régulation de pression (18) étant conçues pour le maintien d'une pression côté consommateur en fonction d'un signal de commande électrique (7a-7 g, 8a-8g), en particulier un courant de commande.

3. Dispositif de régulation selon l'une des revendications précédentes, les capteurs (36) pour la détermination des états de repli (4a à 4g) étant des potentiomètres.

4. Dispositif de régulation selon l'une des revendications précédentes, l'unité de régulation (2) étant configurée pour la mesure et/ou l'entrée de valeurs de pression pour différents états de repli (4a-4g) ainsi que pour le calcul, sur cette base, de valeurs de pression de consigne initiales (5a-5 g, 6a-6g) et pour leur association aux états de repli de la rampe de distribution (10).

5. Dispositif de régulation selon l'une des revendications précédentes, l'unité de régulation (2) étant configurée pour l'addition et/ou la multiplication de valeurs de pression de consigne initiales (5a-5 g, 6a-6g) lues par au moins une constante, en particulier réglable.

6. Dispositif de régulation selon l'une des revendications précédentes, l'unité de régulation (2) étant configurée pour l'adaptation automatique des valeurs de pression de consigne initiales (5a-5 g, 6a-6g) pour les vannes de régulation de pression (18) en fonction du type de rampe de distribution (10) et/ou de son équipement en organes de distribution.

7. Dispositif de régulation selon l'une des revendications précédentes, l'unité de régulation (2) étant conçue pour l'adaptation automatique des valeurs de pression de consigne initiales des vannes de régulation de pression (18) pour des positions intermédiaires de la rampe de distribution (10), en particulier par interpolation linéaire entre les valeurs de pression de consigne (5a-5 g, 6a-6g) pour les positions complètement repliées/déployées incluant la position intermédiaire.

8. Dispositif de régulation selon l'une des revendications précédentes, l'organe de réglage (12) comprenant un vérin hydraulique à double effet.

9. Dispositif de régulation selon l'une des revendications précédentes, l'unité de régulation (2) étant conçue pour la régulation de l'inclinaison intervenant lors et/ou directement après l'ouverture des vannes d'arrêt (23), laquelle régulation adapte la pression côté gauche et côté droit sur l'organe de réglage (12) à l'aide des vannes de régulation de pression (18) lors d'un écart par rapport à une inclinaison de consigne, afin de modifier l'inclinaison de la rampe de distribution (10), en particulier de manière compensatoire pour le rétablissement compensatoire de l'inclinaison de consigne.

10. Véhicule utilitaire agricole destiné à épandre des matières, telles que des engrais, des produits phytosanitaires ou des semences, comportant une rampe de distribution (10) et un dispositif de régulation (1) selon l'une des revendications précédentes.

11. Procédé destiné à faire fonctionner un véhicule utilitaire agricole comportant une rampe de distribution (10) destinée à épandre des matières, telles que des engrais, des produits phytosanitaires ou des semences, comprenant une unité de régulation (2) et des vannes de régulation de pression (18) raccordées à celle-ci pour la régulation de l'inclinaison de la rampe de distribution (10) ainsi que des vannes d'arrêt (23) destinées à bloquer la rampe de distribution (10), celle-ci comprenant des segments repliables (10a) ainsi que, sur les articulations (10c) situées entre eux, des capteurs (36) respectifs pour la détermination des états de repli (4a - 4g) de la rampe de distribution (10), les vannes de régulation de pression (18) et les vannes d'arrêt (23) étant des vannes hydrauliques et/ou pneumatiques, le dispositif de régulation (1) comprenant un organe de réglage (12) raccordé à celui-ci pour la rampe de distribution (10), l'organe de réglage (12) comprenant au moins un vérin fonctionnant de manière pneumatique et/ou hydraulique, au moins une valeur de pression de consigne initiale (5a-5 g, 6a-6g) pour les vannes de régulation de pression (18), associée à l'état de repli (4a-4g) respectif de la rampe de distribution (10), étant lue pour l'ouverture des vannes d'arrêt (23) dans une mémoire de données (3) associée à l'unité de régulation (2) et les vannes de régulation de pression (18) étant réglées à la pression de consigne initiale (5a-5 g, 6a-6g) associée avant l'ouverture des vannes d'arrêt (23).

12. Procédé selon la revendication 11, des valeurs de consigne de pression initiales (5d-5g) communes pour des états de repli asymétriques (4d-4g) se correspondant de manière symétrique étant enregistrées dans la mémoire de données (3) et des signaux de commande (7d-7 g, 8d-8g) spécifiques aux côtés étant calculés à partir de ces valeurs en fonction de l'orientation latérale de l'état de repli (4d-4g) respectif.
